# EUROPEAN PATENT SPECIFICATION

(11) **EP 3 504 561 B1**
(45) Date of publication and mention of the grant of the patent: **25.08.2021**
(21) Application number: 17844057.4
(22) Date of filing: 13.03.2017
(51) Int. Cl.: G01S 15/58, G01S 15/00, G01H 9/00, G01S 7/52

(54) **DOPPLER ULTRASONIC VELOCITY PROBE**
DOPPLER-ULTRASCHALLGESCHWINDIGKEITSSONDE
SONDE DE VITESSE À ULTRASONS À EFFET DOPPLER

(30) Priority: 25.08.2016 US 201615247168
(43) Date of publication of application: 03.07.2019
(73) Proprietor: LOVEJOY CONTROLS CORPORATION, Waukesha, Wisconsin 53187 (US)
(72) Inventor: LOVEJOY, Kim, A., Waukesha, WI 53188 (US)
(74) Representative: Potter Clarkson
(86) International application number: PCT/US2017/022024
(87) International publication number: WO 2018/038767

(56) References cited:
- CN-U- 202 974 215
- JP-A- 2015 516 070
- US-A- 3 325 781
- US-A- 4 018 083
- US-A- 6 014 896
- US-A1- 2004 135 992
- US-A1- 2009 088 902
- US-A1- 2009 260 422
- US-A1- 2011 164 469
- US-A1- 2017 038 469
- US-B1- 8 296 084
- US-B2- 7 034 711

## Description

### Background of the Invention

The present invention is directed to vibration monitoring systems, particularly systems for use with large rotating machinery. Known vibration monitoring sensors for large rotating machinery, eddy-current proximity displacement probes and spring-coil velocity transducers, are hampered with intrinsic errors lessening their effectiveness in providing diagnostic warning or data for balancing and accurate rotor deflection monitoring to determine approaching internal contact between rotating and stationary elements thus protecting against rotor damage during start ups. For example, eddy-current proximity displacement probes may suffer from electrical run-out, magnetic run-out, surface irregularity (dents, scratches, grooves) spiking, and ill-defined calibration. Spring-coil velocity transducers suffer poor low speed outputs, mechanical resonance, and difficulty with coupling to a rotating shaft without use of a contacting shaft rider which itself is spiked by surface irregularities. Therefore, there exists a need for a monitoring system having a sensor void of the aforementioned errors to thereby adequately protect and analyze major rotating equipment, such as but not limited to, steam turbines, combustion turbines, generators, fans, compressors and the like.

US 2009/260422 discloses an ultrasonic sensor includes a transmitting device, a receiving device, and a circuit device. The circuit device determines that the receiving device receives an ultrasonic wave reflected from an object, when an output voltage of the receiving device is equal to or greater than a first threshold. The circuit device includes a humidity detection section configured to detect an ambient humidity of the transmitting and receiving devices and a threshold adjustment section configured to calculate, based on the detected ambient humidity, a sound pressure of the ultrasonic wave that is received by the receiving device after propagating over a round-trip distance between the ultrasonic sensor and the object. The threshold adjustment section reduces the first threshold, when the output voltage corresponding to the calculated sound pressure is less than a second threshold that is greater the first threshold.

US 2011/164469 A1 discloses an acoustic Doppler sensor to measure movement of a rough vibrating surface with an ultrasonic speaker, an ultrasonic microphone and a probe analyzer circuit comprising a microcomputer to perform vibration analysis.

### Summary of the Invention

The present invention provides a system for measuring vibration of a rotating shaft according to claim 1. The system produces vibration analysis data that can be delivered to a host computer. In use, the ultrasonic speaker transmits an ultrasonic signal toward the rotating shaft. The transmitted ultrasonic signal is reflected from the rotating shaft and is detected by the ultrasonic microphone. The signal detected by the microphone is sent to a probe analyzer circuit that processes the signal. A microcomputer within said probe analyzer circuit then performs vibration analysis. The present system may use the reflection of an internally generated, continuous, 25 KHz frequency (ultrasound) incident sound wave to detect the Doppler shift in frequency which is proportional to the target shaft velocity. Preferably, the current system never disengages from a continuous signal, unlike other designs that routinely pulse a background calibration. Discontinuities in the disengaged signal of other designs can be falsely interpreted as vibration phenomena due to voltage step changes in signal output.

The probe analyzer circuit may include, among others, lowpass filters, scale amplifiers, and a primary component selective Phase Locked Loop Demodulator (PLLD) to eliminate background noise from the signal detected by the ultrasonic microphone. Within the probe analyzer circuit, a microcomputer performs analog to digital conversion of the signal, generates vibration analysis data from the signal, and generates probe health diagnostics of the probe. In addition, the microcomputer preferably contains a serial communications network that is buffered with a transceiver chip and is hard wired by way of an RS-485 connection to an LCCNET proprietary device which provides data polling of a network of probes as a host on a query/response basis. The LCCNET device is then hard wired by way of a RS-232 USB cable to a data display and distribution computer that is equipped with software to provide graphical data displays, diagnostics, alarms, and a preferably an Ethernet link to an external server.

Preferably, separate means for vibration analysis is not required since the present system performs all vibration analysis required to detect vibration phenomena, and transmits said vibration analysis to a host computer all in one system. Additionally, by performing the vibration analysis and signal processing within the same system as the probe sensor, any potential for transmission noise is eliminated.

Further, the ultrasonic speaker and ultrasonic microphone are located within a housing at a fixed alignment. The present design preferably positions the ultrasonic microphone in exact coincidence with the opposite direction of the reflected ultrasonic waves, usually employing a fixed 30 degree incidence and 30 degree reflection positioning of the ultrasonic speaker (source) and the ultrasonic microphone (receiver). Preferably, a carrier wave is internally generated from an output capture pin on the microcomputer. Preferably, the ultrasonic signal is reflected off of a relatively large (approximately 2.54 cm (1 inch) diameter) surface area of the test object, resulting in a signal that is not disturbed by dents, grooves, or scratches. Preferably, since only true total surface velocity is measured and not variable metallurgy or contour of a small area, this system adapts to a broader range of applications than other known vibration monitoring systems. Preferably, a microphone input filter helps ensure that the Phased Lock Loop Demodulator (PLLD) receives a signal dominated by the reflected wave frequency. In addition, a buffered, zero-phase pulse provides a timing reference for all time-dependent vibration analysis data such as running speed and half running speed.

As will be discussed, a system according to the present invention further includes a temperature and humidity compensation sensor and preferably an extension tube support, with all components positioned at a fixed distance from a target rotating shaft. The temperature and relative humidity sensor detects and signals the system to compensate for variations in the ambient temperature and relative humidity of the test application. The ambient temperature and relative humidity of the application, for example a turbine monitoring atmosphere, affects the speed of sound by up to 25%. Such changes in the speed of sound directly impact the Doppler velocity. Preferably, the microcomputer receives temperature and humidity senor data through a Serial Peripheral Interface (SPI) port and digitally applies the temperature and relative humidity corrections directly to the analog to digital conversion in software. Preferably, this arrangement provides for highly accurate gain corrections to the signal from changes in temperature and relative humidity, keeping the sensor system in acceptable calibration at all times. The present design preferably utilizes a 25.000 KHz (+/- 200 Hz) incidence wave frequency.

### Brief Description of the Drawings

Figure 1 is a view illustrating a system according to the present invention, the system including a Doppler vibration velocity sensor, and positioned to measure the vibrations of a test object.
Figure 2 is a perspective view of the sensor illustrated in Figure 1.
Figure 3 is a top planar view of the sensor illustrated in Figures 1 and 2.
Figure 4 is an end view of the sensor illustrated in Figures 1 - 3.
Figure 5 is a partial cut away and cross sectional view of the sensor illustrated in Figures 1 - 4, taken along lines 5 - 5 of Figure 2, and showing an ultrasonic speaker and an ultrasonic microphone.
Figure 6 is a view similar to that of Figure 5, but showing the sensor positioned to measure the vibrations of a test object.
Figure 7 is a view similar to that of Figure 6, but showing the sensor measuring the vibrations of a test object.
Figure 8 is a block diagram of a control circuit used with the present invention.
Figure 9 is a diagram of multiple sensors used in a network for vibration detection.

### Description of the Preferred Embodiment

Although the disclosure hereof is detailed and exact to enable those skilled in the art to practice the invention, the physical embodiments herein disclosed merely exemplify the invention which may be embodied in other specific structures. While the preferred embodiment has been described, the details may be changed without departing from the invention, which is defined by the claims.

The use of the imperial unit "inch" herein after relates to the SI unit meter, wherein 1 inch equals 0,0254 meter.

With

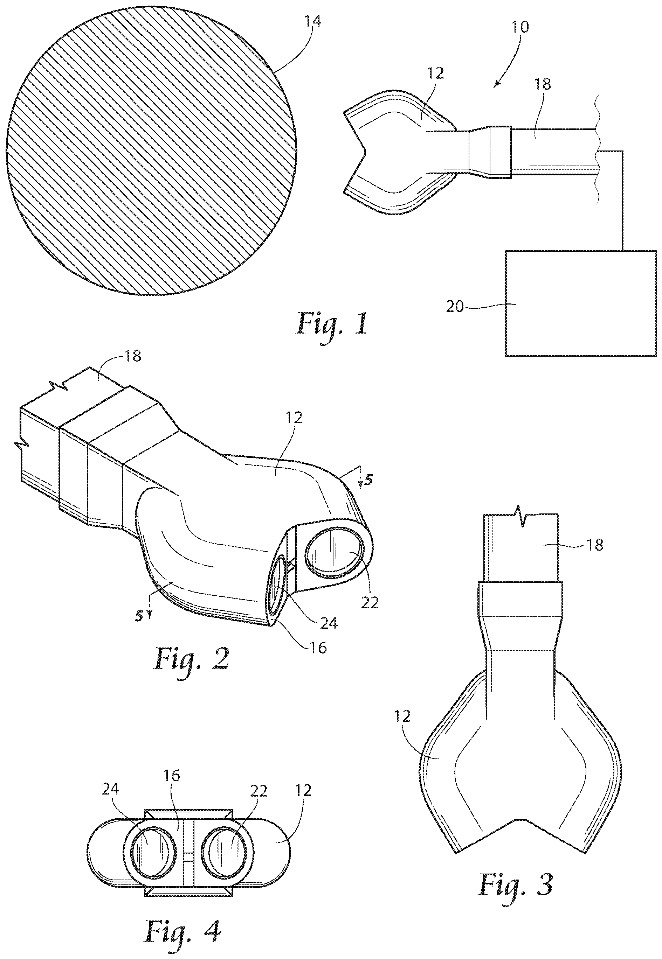

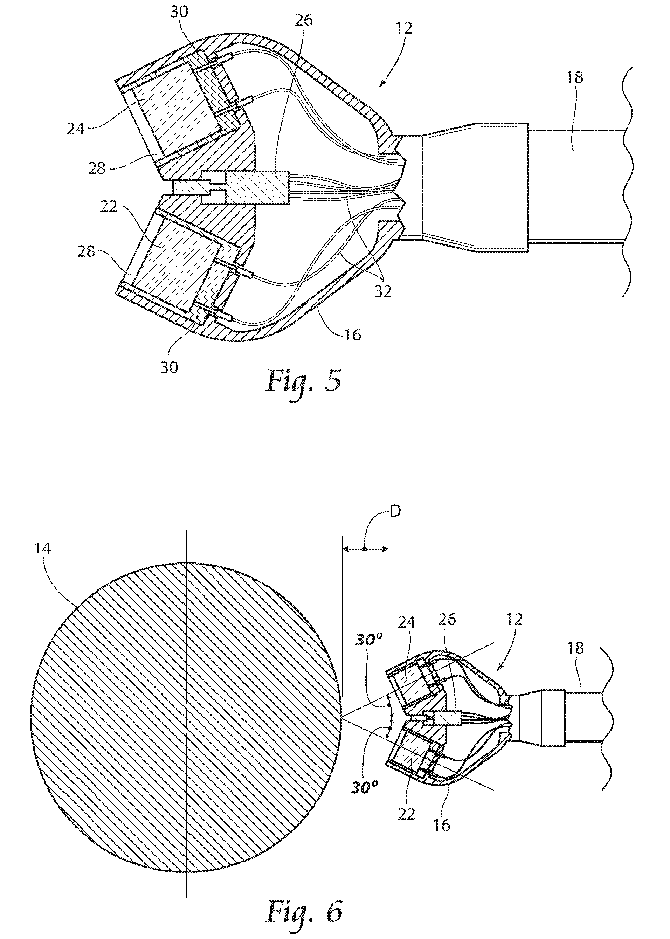

reference to Figures 1 and 2, a system 10 having a probe sensor 12 according to the present invention may be seen. As shown, the system 10 provides a device and method adapted to measure the vibrations of a test object 14, such as a machine shaft or other rotating object. The system 10 includes a probe sensor 12 having a housing 16, an extension tube support 18, and a probe analyzer circuit 20. As seen in Figure 2, a probe sensor 12 for use with the present system 10 includes an ultrasonic speaker 22 and an ultrasonic microphone 24. The probe sensor 12 further includes a temperature and relative humidity sensor 26, as will be discussed (see Figure 5) . Figures 3 and 4 illustrate top and end views, respectively, of the probe sensor 12 shown in Figures 1 and 2.

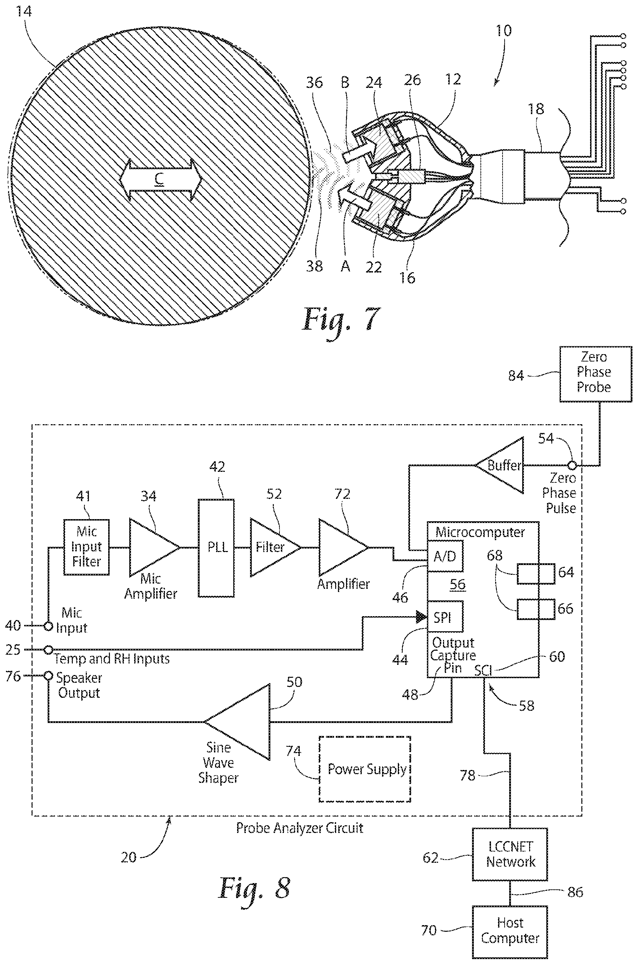

With attention now to the cross sectional view of Figure 5, the sensor 12 with the ultrasonic speaker 22 and ultrasonic microphone 24 are seen as preferably fitted into a molded housing 16. The housing 16 includes cradle openings 28 and foam isolation jackets 30 to attenuate the incident frequency conduction in the housing 16. An extension tube 18 channels component wiring 32 to a probe analyzer circuit 20 (see Figure 8), as will be discussed. The extension tube 18 may be of any length necessary for the specific application, and is determined by the particular requirements of the housing 16 and target rotating shaft 14 (see Figure 6). As shown, the present system 10 uses a fixed alignment ultrasonic speaker 22 and ultrasonic microphone 24, each placed at a fixed distance D (see Figure 6) from the test object 14. As mentioned, the sensor 12 includes a temperature and relative humidity sensor 26. The temperature and relative humidity sensor 26 detects and compensates for temperature and relative humidity, since the ambient temperature and relative humidity affects the speed of sound by up to 25% in the application (e.g. turbine monitoring) atmosphere, and changes in the speed of sound directly impact the Doppler velocity.

As seen particularly in Figures 6 and 7, the ultrasonic microphone 24 of the present system 10 is preferably positioned in exact coincidence with the opposite direction of the reflected ultrasonic waves 36. As shown in Figure 6, a preferred position is a fixed 30 degree incidence and 30 degree reflection positioning of the ultrasonic speaker 22 and ultrasonic microphone 24. The probe 12 is further preferably positioned a predetermined distance D, from the target test object 14. An example distance D, may be 2.54 cm (1.0") with a ± 0.635 cm (+/-0.25 inch) tolerance.

In use, and as shown in Figures 7 and 8, the ultrasonic speaker 22 transmits an ultrasonic signal 38, preferably a 25.000 KHz (+/- 200 Hz) incidence wave frequency, toward the target object 14 in the direction of arrow A. The ultrasonic carrier signal 38 is internally generated at an adjustable rate from an output capture pin 48 on the microcomputer 56. The carrier signal generated by the output capture pin 48 is converted to a sine wave by a wave shaper circuit 50 before speaker output 76 transmission through the ultrasonic speaker 22. As previously mentioned, the present system 10 uses the reflection of the continuous 25.000 KHz frequency (ultrasound) incident sound wave to detect the Doppler shift in frequency which is proportional to the target shaft 14 velocity. The transmitted ultrasonic signal 38 is reflected from the test object 14 as reflected waves 36 in the direction of arrow B, and is detected by the ultrasonic microphone 24. Any oscillations or fluctuations C in the rotating shaft 14 will cause variations in the reflected ultrasonic wave 36 at the ultrasonic microphone 24. An output signal from the ultrasonic microphone 24 is then transmitted to a probe analyzer circuit 20 by way of wiring 32 or other conventional means through microphone input 40. The probe analyzer circuit is powered by power supply 74.

As shown in Figure 8, a microcomputer 56 receives temperature and humidity input corrections 25 via a Serial Peripheral Interface link 44 and digitally, within its code, applies the input corrections 25 directly to the analog to digital signal conversion 46. This retains the sensor system 10 (see figure 7) in acceptable calibration at all times. To reduce background noise, the system 10 may preferably include other components as mentioned above, such as microphone input filter 41, microphone amplifier 34, Phase Locked Loop demodulator (PLLD) 42, low-pass filter 52, scale amplifier 72, and mechanical acoustical isolation, such as the jackets 30 shown (see figure 5). After the signal is processed through microphone input filter 41, microphone amplifier 34, Phase Locked Loop demodulator 42, low-pass filter 52, and scale amplifier 72, the signal is sent to the microcomputer 56 for analog to digital conversion. The signal enters the analog to digital input 46 as a biased, demodulated, continuous, analog signal. Since the output after signal processing by the Phase Lock Looped demodulator 42, low pass filter 52, and scale amplifier 72 is in direct proportion to the target shaft velocity, the output represents a real time signal useful for analysis and unburdened by breaks or discontinuities with all gain compensation adjustments affecting only the AC peak-to-peak voltage amplitude and never the primary signal phase nor frequency.

Once the signal has been digitized, the microcomputer 56 performs vibration analysis. Vibration data generated by the microcomputer 56 can include but is not limited to data such as the running speed frequency (Hz), unfiltered velocity (inch/second or micron/second), running speed filtered velocity (inch/second or micron/second), half running speed filtered velocity (inch/second or micron/second), twice running speed frequency filtered velocity (inch/second or micron/second), running speed phase (degrees), running speed filtered displacement (mm or microns), and running speed (revolutions/minute). The microcomputer 56 uses a buffered, zero-phase pulse 54 transmitted from zero phase probe 84 as a once-per-shaft revolution timing signal reference to generate time-dependent vibration analysis data.

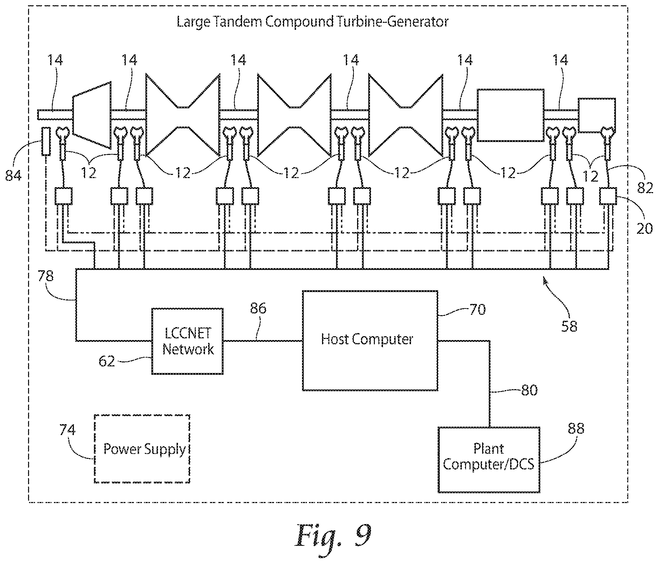

As best shown in Figures 8 and 9, upon query from the LCCNET network protocol device 62, any or all of this vibration data is delivered via a serial communications network 58. The serial communications network 58 includes a serial communications port 60 that is buffered with a transceiver chip that receives queries from the LCCNET network protocol device 62 and transmits the vibration analysis requested to the LCCNET network protocol device 62 by way of an RS-485 connection 78. The LCCNET network protocol device 62 automatically polls the vibration data from each probe sensor 20 in less than 0.0417 seconds, and stacks the vibration data from multiple probe sensors 20 into one message that is provided to the data display and distribution computer 70 at a rate of once/second. The data display and distribution computer 70 is equipped with software to provide graphical data displays, diagnostics, alarms, and an Ethernet link 80 to a plant computer 88.

The microcomputer 56 also generates diagnostic data such as probe signal loss, carrier frequency loss, and demodulator power loss. Said diagnostic data is sent to the data display and distribution computer 70 prior to any vibration data to prevent the data display and distribution computer 70 from interpreting these events as vibration phenomena in the industrial machine being monitored. This prevents false emergency shutdowns of the monitored machine. Said diagnostic data is delivered via the same serial communications network 58 as said vibration data. By utilizing a polled digital serial data stream rather than simply producing a continuous analog output for downstream analysis, the present system prevents the possibility of introducing transmission noise prior to vibration analysis.

As best shown in Figure 9, multiple probe sensors 12 can be used together in a network to provide vibration analysis at a variety of locations along a large rotating object, such as a large tandem compound turbine-generator. Zero-phase probe 84 provides a timing reference for vibration analysis performed by probe analyzer circuit 20. The wiring connection between the probe sensor 12 and probe analyzer circuit 20 is preferably protected by flexible, armored cable 82 to provide strain relief and adjustable probe sensor 12 placement. The probe analyzer circuit 20 communicates with the LCCNET network protocol device 62 via a RS-485 connection 78, and the LCCNET network protocol device 62 connects to the external data display and distribution computer 70 via a USB cable 86. The LCCNET network protocol device 62 requests and reads polling data much faster than a typical computer USB port, and so the use of the LCCNET network protocol device 62, which stacks all data into one, once/second message, as an intermediary between probe analyzer circuits 20 and the data display and distribution computer 70, allows up to 32 probes to be used in a single network. Multiple LCCNET host devices may be employed to raise probe counts of a system in quantities of thirty-two each. The high volume of probe sensors and vibration data gives the user an incredibly accurate sampling of vibration phenomena.

As shown in Figure 8, further configuration can be performed by manually toggling a pair of eight-position Dual in-line Package (DIP) switches 64 and 66 which connect to two eight-bit microcomputer ports 68. DIP switches 64 and 66 provide direct manual configuration of the microcomputer 56 by the user. DIP switch 64 provides manual assignment of the engineering units desired for the vibration data output and also provides manual assignment of the direction of shaft rotation. The second DIP switch 66 provides manual input of the serial network drop code, transceiver drop code, and installation phase angle of the Doppler Ultrasonic Velocity Probe to ensure correct data output.

It is not desired to limit the invention to the exact construction and operation shown and described. While the preferred embodiment has been described, the details may be changed without departing from the invention, which is defined by the claims.

## Claims

1. A system (10) for measuring vibration of a rotating shaft (14) including:
a probe sensor (12) having a temperature and humidity compensation sensor (26) and a housing, said housing including a first cradle opening (28) and a second cradle opening (28);
an ultrasonic speaker (22), said ultrasonic speaker being positioned in said first cradle opening and configured to transmit an ultrasonic signal (38) toward said rotating shaft (14);
an ultrasonic microphone (24), said ultrasonic microphone located within said second cradle opening and configured to receive a reflected ultrasonic signal (36) from said rotating shaft (14); and
a probe analyzer circuit (20) comprising a microcomputer (56), said microcomputer being operable to: (i) perform vibration analysis and probe health diagnostics and (ii) generate probe signal loss, carrier frequency loss and demodulator power loss diagnostic data.

2. The system of claim 1, wherein at least one of said first cradle opening (28) and said second cradle opening (28) includes an isolation jacket (30).

3. The system of claim 1, wherein said probe sensor (12) further includes an extension tube support (18).

4. The system of claim 1, wherein said probe sensor (12) is positionable at a fixed distance from said rotating shaft (14).

5. The system of claim 1, wherein said reflected ultrasonic signal (36) is transmittable to the probe analyzer circuit (20), said probe analyzer circuit including at least one filter (41) and at least one amplifier (34).

6. The system of claim 1, wherein said microcomputer (56) is configured to transmit said vibration analysis and said probe health diagnostics via a serial communications network (58).

7. The system of claim 1, further comprising an external host computer to automatically poll said vibration analysis and said probe health diagnostics.

8. The system of claim 1, wherein the microcomputer (56) is further operable to perform analog to digital conversion of the reflected ultrasonic signal received by the ultrasonic microphone.

9. The system of claim 8, wherein said microcomputer (56) is further operable to digitally apply temperature and humidity corrections to the digitally converted reflected ultrasonic signal based on temperature and humidity data received from the temperature and humidity compensation sensor to compensate for reflected ultrasonic signal gain.

## Patentansprüche

1. System (10) zum Messen einer Schwingung einer Drehwelle (14), das Folgendes beinhaltet:
einen Sondensensor (12), der einen Temperatur- und Feuchtigkeitskompensationssensor (26) und ein Gehäuse aufweist, wobei das Gehäuse eine erste Aufnahmeöffnung (28) und eine zweite Aufnahmeöffnung (28) beinhaltet;
einen Ultraschalllautsprecher (22), wobei der Ultraschalllautsprecher in der ersten Aufnahmeöffnung positioniert und konfiguriert ist, um ein Ultraschallsignal (38) in Richtung der Drehwelle (14) zu übertragen;
ein Ultraschallmikrofon (24), wobei sich das Ultraschallmikrofon innerhalb der zweiten Aufnahmeöffnung befindet und konfiguriert ist, um ein reflektiertes Ultraschallsignal (36) von der Drehwelle (14) zu empfangen; und
ein Sondenanalysatorschaltkreis (20), der einen Mikrocomputer (56) umfasst, wobei der Mikrocomputer betriebsfähig ist, um (i) eine Schwingungsanalyse und eine Sondenzustandsdiagnose durchzuführen und (ii) Sondensignalverlust, Trägerfrequenzverlust und Demodulatorleistungsverlustdiagnosedaten zu erzeugen.

2. System nach Anspruch 1, wobei die erste Aufnahmeöffnung (28) und/oder die zweite Aufnahmeöffnung (28) eine Isolierhülle (30) beinhaltet.

3. System nach Anspruch 1, wobei der Sondensensor (12) ferner einen Verlängerungsrohrträger (18) beinhaltet.

4. System nach Anspruch 1, wobei der Sondensensor (12) in einem festen Abstand von der Drehwelle (14) positionierbar ist.

5. System nach Anspruch 1, wobei das reflektierte Ultraschallsignal (36) an den Sondenanalysatorschaltkreis (20) übertragbar ist, wobei der Sondenanalyseschaltkreis wenigstens einen Filter (41) und wenigstens einen Verstärker (34) beinhaltet.

6. System nach Anspruch 1, wobei der Mikrocomputer (56) konfiguriert ist, um die Schwingungsanalyse und die Sondenzustandsdiagnose über ein serielles Kommunikationsnetz (58) zu übertragen.

7. System nach Anspruch 1, das ferner einen externen Host-Computer umfasst, um die Schwingungsanalyse und die Sondenzustandsdiagnose automatisch abzurufen.

8. System nach Anspruch 1, wobei der Mikrocomputer (56) ferner betriebsfähig ist, um eine Analog-Digital-Umsetzung des reflektierten Ultraschallsignals, das durch das Ultraschallmikrofon empfangen wird, durchzuführen.

9. System nach Anspruch 8, wobei der Mikrocomputer (56) ferner betriebsfähig ist, um Temperatur- und Feuchtigkeitskorrekturen auf das digital umgesetzte reflektierte Ultraschallsignal basierend auf Temperatur- und Feuchtigkeitsdaten digital anzuwenden, die von dem Temperatur- und Feuchtigkeitskompensationssensor empfangen werden, um für eine reflektierte Ultraschallsignalverstärkung zu kompensieren.

## Revendications

1. Système (10) destiné à mesurer la vibration d'un arbre rotatif (14) comportant :
un capteur de sonde (12) ayant un capteur de compensation de température et d'humidité (26) et un boîtier, ledit boîtier comportant une première ouverture de berceau (28) et une seconde ouverture de berceau (28) ;
un haut-parleur ultrasonore (22), ledit haut-parleur ultrasonore étant positionné dans ladite première ouverture de berceau et configuré pour émettre un signal ultrasonore (38) vers ledit arbre rotatif (14) ;
un microphone ultrasonore (24), ledit microphone ultrasonore étant situé à l'intérieur de ladite seconde ouverture de berceau et configuré pour recevoir un signal ultrasonore réfléchi (36) provenant dudit arbre rotatif (14) ; et
un circuit analyseur de sonde (20) comprenant un micro-ordinateur (56), ledit micro-ordinateur étant exploitable pour : (i) effectuer une analyse de vibration et des diagnostics de santé de la sonde et (ii) générer des données de diagnostic de perte de signal de sonde, de perte de fréquence porteuse et de perte de puissance de démodulateur.

2. Système selon la revendication 1, dans lequel ladite première ouverture de berceau (28) et/ou ladite seconde ouverture de berceau (28) comporte une chemise d'isolation (30).

3. Système selon la revendication 1, dans lequel ledit capteur de sonde (12) comporte en outre un support de tube d'extension (18).

4. Système selon la revendication 1, dans lequel ledit capteur de sonde (12) peut être positionné à une distance fixe dudit arbre rotatif (14).

5. Système selon la revendication 1, dans lequel ledit signal ultrasonique réfléchi (36) peut être transmis au circuit analyseur de sonde (20), ledit circuit analyseur de sonde comportant au moins un filtre (41) et au moins un amplificateur (34).

6. Système selon la revendication 1, dans lequel ledit micro-ordinateur (56) est configuré pour transmettre ladite analyse de vibration et lesdits diagnostics de santé de la sonde par l'intermédiaire d'un réseau de communication en série (58).

7. Système selon la revendication 1, comprenant en outre un ordinateur hôte externe pour interroger automatiquement ladite analyse de vibration et ledit diagnostic de santé de la sonde.

8. Système selon la revendication 1, dans lequel le micro-ordinateur (56) est en outre exploitable pour effectuer une conversion analogique-numérique du signal ultrasonore réfléchi reçu par le microphone ultrasonore.

9. Système selon la revendication 8, dans lequel ledit micro-ordinateur (56) est en outre exploitable pour appliquer numériquement des corrections de température et d'humidité au signal ultrasonore réfléchi converti numériquement sur la base des données de température et d'humidité reçues du capteur de compensation de température et d'humidité pour compenser le gain de signal ultrasonore réfléchi.
